# EUROPÄISCHE PATENTSCHRIFT

(11) **EP 2 276 902 B1**
(45) Veröffentlichungstag und Bekanntmachung des Hinweises auf die Patenterteilung: **30.07.2014**
(21) Anmeldenummer: 09726834.6
(22) Anmeldetag: 10.02.2009
(51) Int. Cl.: E05F 15/00, G01V 8/18

(54) **VERFAHREN UND EINRICHTUNG ZUR STEUERUNG EINES VERTIKAL ODER HORIZONTAL BEWEGTEN TORES UNTER ABSICHERUNG DER TORSCHLIESSEBENE GEGENÜBER HINDERNISSEN**
METHOD AND DEVICE FOR CONTROLLING A VERTICAL OR HORIZONTALLY MOVING GATE WHILE SECURING THE GATE CLOSING PLANE AGAINST OBSTACLES
PROCEDE ET DISPOSITIF DE COMMANDE D'UNE PORTE A DEPLACEMENT VERTICAL OU HORIZONTAL, AVEC SECURISATION ANTI-OBSTACLES DU PLAN DE FERMETURE DE PORTE

(30) Priorität: 04.04.2008 DE 102008017244
(43) Veröffentlichungstag der Anmeldung: 26.01.2011
(73) Patentinhaber: Efaflex Tor- und Sicherheitssysteme GmbH & Co. KG, 84079 Bruckberg (DE)
(72) Erfinder: BARTOLE, Dieter, 84091 Attenhofen (DE); KREMSER, Hans-Jörg, 84079 Bruckberg (DE)
(74) Vertreter: Kuhnen & Wacker
(86) Internationale Anmeldenummer: PCT/EP2009/000936
(87) Internationale Veröffentlichungsnummer: WO 2009/121449

(56) Entgegenhaltungen:
- EP-A- 1 470 314
- DE-A1- 3 325 220

## Beschreibung

Die Erfindung betrifft ein Verfahren und eine Einrichtung zur Absicherung der Torschließebene eines Tores oder anderen Verschlusselementes, welches eine Toröffnung durch Bewegung in einer vertikalen oder horizontalen Ebene verschließt.

Es ist allgemein bekannt, dass bei automatisch betätigten Toren oder Türen Sicherheitsvorkehrungen getroffen werden müssen, damit Hindernisobjekte oder Personen nicht von der bewegten Torschließkante getroffen werden und damit beschädigt bzw. verletzt werden können.

Zu diesem Zweck hat man bekanntermaßen an den Stoßkanten automatisch betätigter Tore bzw. Türen Berührungs-Kantenabsicherungen angeordnet, welche bei Auftreten einer Gegenkraft (Detektion eines Hindernisses) den Torantrieb oder Türantrieb stillsetzen bzw. sogar ein "Freifahren" im Sinne einer Fahrrichtungsumkehr bewirken.

Eine andere bekannte Lösung, welche diesen Schutz gewährleistet, besteht darin, knapp vor und hinter der Torschließebene Lichtschranken bzw. Lichtgitter, bestehend aus einer Vielzahl von Lichtschranken, anzubringen und dadurch beidseits der Torkante einen Sicherheits-Lichtvorhang zu erzeugen.

- Ein sehr vorteilhaftes System dies zu bewerkstelligen, wobei ein sequentielles Unberücksichtigtlassen bestimmter Lichtschranken vorgesehen ist, mit der Folge, dass mit nur einem Lichtgitter innerhalb der Torschließebene selbst operiert werden kann, beschreibt die EP 0 902 158.

Eine weitere Möglichkeit der Absicherung besteht darin, oberhalb der Tor- oder Türöffnung Sensoren anzubringen, die jeweils knapp vor der Torschließebene ein Sicherheitsfeld erzeugen, das bis zum Boden reicht und auch eine räumliche Ausdehnung in die Tiefe haben kann. Gebräuchlich sind hier Infrarot- oder Ultraschallsensoren, sowie Radarsensoren.

Eine weitere Möglichkeit ist, bereits ins Vorfeld der Toröffnung hinein zu detektieren und so die Annäherung von Objekten oder Personen zu erkennen. Eine sichere, vorteilhafte Methode hierzu beschreibt die EP 1 470 314.

Der Nachteil taktiler, also auf eine Objektberührung ansprechender Systeme liegt darin, dass es auf alle Fälle zu einer Berührung kommt, bevor der Sensor ein Stilllegen bzw. die Umkehr der Bewegungsrichtung des Torantriebs bewirken kann. Gegebenenfalls kommt es dadurch zumindest zu leichten Verletzungen oder Beschädigungen.

Lösungen mit Lichtschranken und Lichtgittem, wie etwa aus der DE 33 25 220 A1 bekannt, haben den Nachteil, dass es durch Fremdlichteinflüsse, Verschmutzungen bzw. unpräzise Montage zu Ausfällen kommt. Der konstruktive Aufwand ist hoch, betrachtet man die Tatsache, dass zumindest zwei Systemkomponenten angebracht werden müssen, nämlich Sender und Empfänger eines Lichtgittersystems. Geht man von Montage von Lichtgittern vor und hinter der Tor-/ Türzarge aus, sind somit vier Komponenten anzubringen. Bei dieser Lösung verbleibt außerdem vor der Torkante ein nicht abgesicherter Bereich.

Die in der EP 1 470 314 beschriebene Lösung zielt auf die Absicherung des Vorfeldes ab und kann mit einem hohen Aufwand verbunden sein. Je nach

Anbringung entstehen Sicherheitslücken vor der Torschließebene, die nur mit Zuhilfenahme von zwei Sensorsystemen abgedeckt werden können. Die Absicherung der Torschließebene ist nicht das primäre Ziel und entsprechend ist die Torschließebene nicht flächig abgedeckt.

Es sei noch erwähnt, dass es allgemein bekannt ist, vertikale Überwachungsbereiche, beispielsweise Gehäusefassaden, oder aber horizontale Überwachungsbereiche, beispielsweise Grundstücke, mit Abtaststrahlen eines Laserradar-Abtastdetektors abzutasten und auf diese Weise bei Verletzung des jeweiligen Überwachungsbereiches ein Wächtersignal zu erzeugen, das einer entsprechenden Auswertung zugeführt wird.

Durch die Erfindung soll die Aufgabe gelöst werden, ein Verfahren und eine Einrichtung zur Steuerung eines Tores in solcher Weise auszugestalten, dass die Auswertung von Entfernungsmess-Detektorstrahlen eines Entfemungsmess-Abtastdetektors, welcher nahe der Toröffnungsberandung angeordnet ist, sich stark vereinfacht, wobei das System auf vielerlei geometrische Gegebenheiten und Betriebsbedingungen anwendbar und auf diese abstimmbar ist, und wobei außerdem eine erhöhte Unempfindlichkeit gegenüber Montagetoleranzen und gegenüber bestimmten Reflexionseigenschaften der Umgebung nahe der Berandung der Toröffnung erreicht wird.

Diese Aufgabe wird erfindungsgemäß durch die Merkmale von Anspruch 1 bzw. von Anspruch 2 gelöst; vorteilhafte Ausgestaltungen und Weiterbildungen sind Gegenstand der nachgeordneten Ansprüche.

Ein wichtiges Merkmal des hier angegebenen Verfahrens besteht darin, dass ein einer Berandung der Toröffnung naheliegend montierter einziger Entfernungsmess-Abtastdetektor mittels zwei synchron verschwenkten Entfernungsmess-Detektorstrahlen, welche in Ebenen parallel zur Torbewegungsebene vor und hinter dieser gleichsam Überwachungsvorhänge bestimmten Formates erzeugen, durch vergleichsweise einfache Maßnahmen ein gegabelter Entfernungsmessdetektorstrahl verwirklicht wird, welcher zur Dimensionierung der von ihm erzeugten beiden Überwachungsvorhänge vor und hinter der Toröffnung keiner hochpräzisen Ausrichtung der einzelnen Entfernungsmess-Detektorstrahlen bedarf. Da die Entfernungsmess-Detektorstrahlen von einem einzigen Entfernungsmess-Abtastdetektor ausgehen, gestaltet sich die Auswertung der Messergebnisse der Entfernungsmess-Detektorstrahlen und die Weiterleitung des Auswertergebnisses zur Stillsetzung oder zur raschen Umsteuerung des Motorantriebs besonders einfach.

Nachfolgend werden Ausführungsformen des hier angegebenen Verfahrens bzw. von Einrichtungen zur Durchführung dieses Verfahrens anhand der Zeichnungen näher beschrieben. In diesen stellen dar:
- Fig. 1: eine schematische perspektivische Ansicht einer Einrichtung zur Steuerung eines Tores gemäß einer ersten Ausführungsform;
- Fig. 2: eine schematische perspektivische Darstellung ähnlich Fig. 1 zur Verdeutlichung einer weiteren Ausführungsform;
- Fig. 3: eine schematische perspektivische Darstellung einer Einrichtung zur Steuerung eines Tores ähnlich den Ausführungsformen nach den Figuren 1 und 2 gemäß einer dritten Ausführungsform;
- Fig. 4: eine schematische Darstellung eines Entfernungsmess-Abtastdetektors und von Teilen eines zu steuernden Tores gemäß einer bestimmten Ausbildung der Auswerteinrichtungen;
- Fig. 5: eine schematische Darstellung ähnlich Fig. 4 zur Verdeutlichung einer anderen Art der Ausbildung der Auswerteinrichtungen; und
- Fig. 6: eine ähnliche schematische Darstellung wie die Figuren 4 und 5 zur Ausbildung der Auswerteinrichtungen des Entfernungsmess-Abtastdetektors für die Anwendung in einer bestimmten Umgebungssituation.

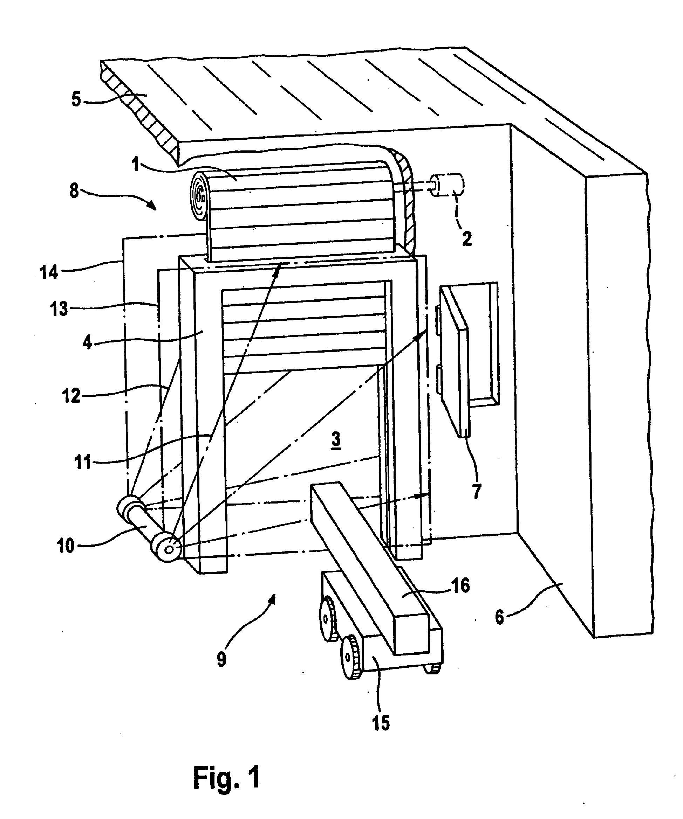

Fig. 1 zeigt ein vertikal bewegbares Rolltor 1, welches mittels eines Motorantriebs 2 zum Freigeben oder Verschließen einer Toröffnung 3 innerhalb einer Torberandung 4 aus vertikalen Führungszargen und einer Traverse verfahrbar ist. Die Toröffnung 3 ist in einem Gebäudeteil 5 vorgesehen, das vorspringende Bereiche 6, neben der Toröffnung 3 befindliche Fenster oder Klappen 7 und ähnliche Details aufweisen kann. Die Toröffnung 3 verbindet eine Gebäudeinnenseite 8 und eine Gebäudeaußenseite 9.

Nahe der Berandung 4 der Toröffnung 3 ist ein entweder die Berandung 4 oder die an diese angrenzenden Gebäudeteile durchdringender Entfernungsmess-Abtastdetektor 10 nahe der unteren Ecke der Toröffnung 3 vorgesehen, welcher in Ebenen parallel zur Bewegungsebene des Tores 1 in vergleichsweise geringem Abstand davor und dahinter synchron Entfernungsmess-Detektorstrahlen 11 und 12 auf der Gebäudeaußenseite 9 bzw. auf der Gebäudeinnenseite 8 über einen Winkelbereich von etwa 90° verschwenkt.

Die Entfernungsmess-Detektorstrahlen tasten auf der Gebäudeaußenseite 9 einen im wesentlichen rechteckigen Sicherheitsvorhang 13 vor der Toröffnung 3 und der Berandung 4, bzw. auf der Gebäudeinnenseite 8 einen ebenfalls rechteckigen Sicherheitsvorhang 14 hinter der Berandung 4 und hinter der Toröffnung 3 ab.

Die rechteckige Gestalt der Sicherheitsvorhänge 13 und 14 aufgrund der Verschwenkung der Entfernungsmess-Detektorstrahlen 11 und 12 ergibt sich daraus, dass während der Schwenkbewegung detektierte Entfernungsmesswerte jeweils mit entsprechenden, trigonometrisch auf die Tordimension und die umgebende, noch zu überwachende Gebäudedimension umgerechneten Entfemungsmess-Grenzbezugswerten verglichen werden, wobei beim Auftreffen von dem gegenüber kleineren Entfernungsmesswerten bei Auswertung des einen und/oder anderen Entfernungsmess-Detektorstrahls 11 bzw. 12 ein eine Stillsetzung und/oder Umsteuerung des Motorantriebs 2 auslösendes Alarmsignal erzeugt wird.

Man erkennt, dass die im wesentlichen rechteckiges Format aufweisenden, durch die Schwenkbewegungen der Entfernungsmess-Detektorstrahlen 11 und 12 aufgespannten Sicherheitsvorhänge 13 und 14 so bemessen werden können, dass sie nicht nur die beim Niederfahren des Tores 1 noch verbliebene Toröffhung 3 überdecken, sondern auch das bereits von dem niederfährenden Tor 1 abgedeckte Teilformat der Toröffnung 3 abdecken.

Die zuvor gemachte Angabe, dass die zwei Entfernungsmess-Detektorstrahlen 11 und 12 in Ebenen parallel zur Torbewegungsebene in vergleichsweise geringem Abstand davor und dahinter synchron verschwenkt werden, ist dahingehend zu verstehen, dass dann, wenn ein Hindernisobjekt nicht etwa die noch verbleibende offene Toröffnung 3 trifft, sondern etwas oberhalb in Richtung auf den bereits niedergefahrenen Teil des Tores 1 gerichtet ist, dieses Hindernisobjekt in solchem Abstand von dem niederfahrenden Tor 1 auf den Sicherheitsvorhang 13 oder den Sicherheitsvorhang 14 trifft und den jeweiligen Entfernungsmess-Detektorstrahl 11 bzw. 12 unterbricht, dass noch ausreichende Zeit für eine Schnellumsteuerung des Motorantriebs 2 verbleibt, um das niederfahrende Tor 1 zurückzuziehen und vor einem Zusammenstoss mit dem Hindernisobjekt zu schützen.

Die rechteckige Gestalt der Sicherheitsvorhänge 13 und 14 auf der Gebäudeaussenseite 9 bzw. der Gebäudeinnenseite 8 ist so gewählt, dass nicht etwa ein Auftreffen der Entfernungsmessdetektorstrahlen 11 bzw. 12 auf die Klappe 7 oder das Gebäudeteil 6 als Hindernis missverstanden wird. In diesem Zusammenhang sei bemerkt, dass für die Dimensionierung der Sicherheitsvorhänge 13 und 14 auf der Gebäudeaußenseite 9 bzw. der Gebäudeinnenseite 8 unterschiedliche Kriterien gültig sein können und somit eine unterschiedliche Bemessung der Formate der Sicherheitsvorhänge 13 und 14 möglich ist, worauf nachfolgend noch eingegangen wird.

Das in der schematischen Darstellung von Fig. 1 abgebildete Hindernisobjekt 15 ist ein sich von der Gebäudeaußenseite 9 der Toröffnung 3 näherndes Fahrzeug 15 mit einem darauf befindlichen Träger 16, welcher in dem gezeigten Beispiel den noch freien Teil der Toröffnung 3 während des Herunterfahrens des Tores 1 trifft und dabei den gebäudeaußenseitigen Sicherheitsvorhang 13 trifft, so dass ein Entfernungsmess-Detektorstrahl 11 während seiner Abtastschwenkbewegung außerhalb eines Entfernungsmess-Grenzbezugswertes unterbrochen wird und somit die Stillsetzung und/oder die Umsteuerung des Motorantriebs 2 auslöst. Entsprechende Verhältnisse herrschen bei der Anfahrt eines Fahrzeugs nach der Art der Fahrzeugs 15 und eines Trägers 16 in Richtung auf die Toröffnung 3 von der Gebäudeinnenseite 8 her.

Die Dimensionierung der Sicherheitsvorhänge 13 und 14, welche von den Entfernungsmess-Detektorstrahlen 11 und 12 bei ihrer Schwenkbewegung aufgespannt werden, durch trigonometrisch auf die Formate der Sicherheitsvorhänge umgerechnete Laufzeitfenster des durch ein Laserradar gebildeten Entfernungsmess-Abtastdetektors 10 hat den wesentlichen Vorteil, dass für die Begrenzung der Formate der Sicherheitsvorhänge 13 und 14 es nicht auf Reflexionseigenschaften etwa der Torberandung 4 oder von Gebäudeteilen ankommt, wodurch eine Unabhängigkeit von den Umgebungsbedingungen erreicht wird, welche es ermöglicht, das hier angegebene Verfahren bzw. die hier angegebene Einrichtung in vielerlei Situationen ohne wesentliche Umgestaltungen einsetzen zu können.

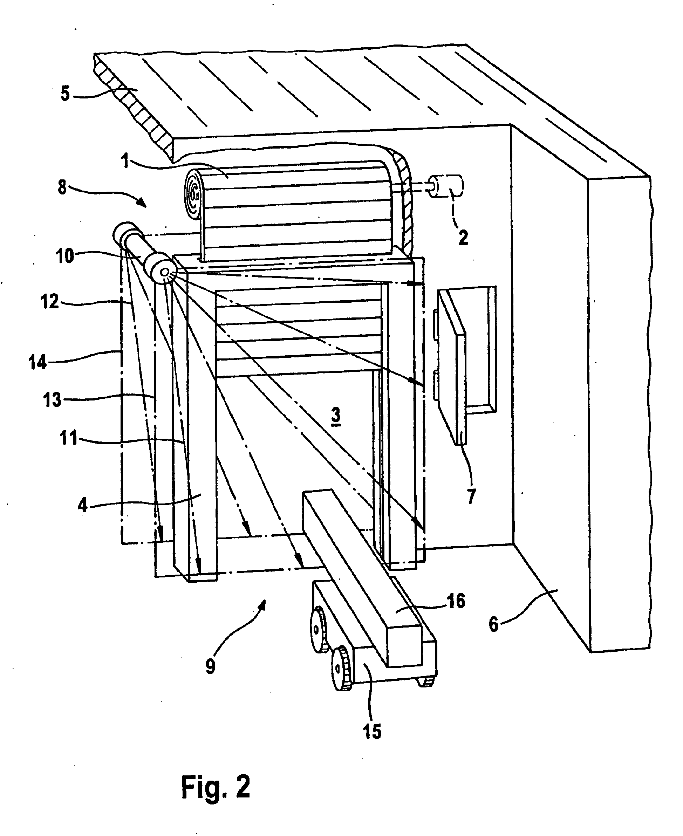

Die Ausführungsform nach Fig. 2 unterscheidet sich von derjenigen nach Fig. 1 im wesentlichen nur dadurch, dass der Entfernungsmess-Abtastdetektor 10 nicht an oder nahe der unteren Ecke der Toröffnung 3 sondern nahe der oberen Ecke der Toröffnung 3 bzw. ihrer Berandung 4 angeordnet ist. Der Schwenkbereich der Entfernungsmess-Detektorstrahlen 11 und 12 auf der Gebäudeaußenseite 9 bzw. der Gebäudeinnenseite 8 ist auch bei dieser Ausführungsform etwa 90° Grad. Die Anordnung des Entfernungsmess-Abtastdetektors 10 in der Lage in beträchtlicher Höhe über dem Boden bietet einen verbesserten Schutz für den Entfernungsmess-Abtastdetektor 10 vor Verschmutzung, mechanischer Beschädigung und auch gegenüber Beeinflussung beispielsweise durch Schneeauflage oder dergleichen. Im übrigen sind bei der Darstellung von Fig. 2 dieselben Bezugszahlen wie bei der Ausführungsform gemäß Fig. 1 für entsprechende Teile gewählt, wobei hinsichtlich Ausbildung und Funktionsweise auch entsprechendes gilt wie bei der Ausführungsform nach Fig. 1, so dass eine detaillierte Beschreibung insoweit bezüglich der Ausführungsform von Fig. 2 entbehrlich ist.

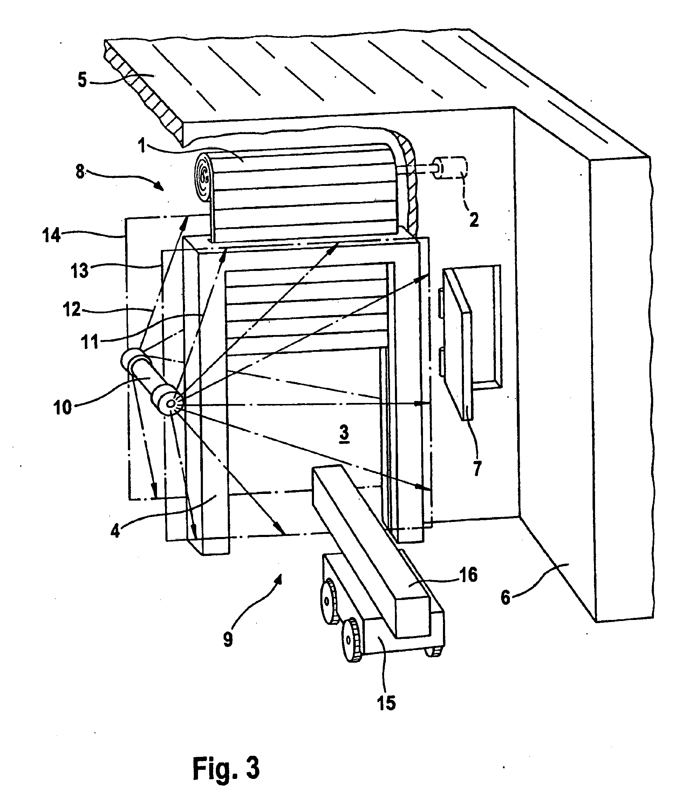

Ganz entsprechendes gilt auch für die in Fig. 3 gezeigte Ausführungsform, welche bei entsprechender Funktion und Ausgestaltung ihrer Einzelheiten, welche mit gleichen Bezugszeichen bezeichnet sind, sich aber von den zuvor beschriebenen Ausführungsformen dadurch unterscheidet, dass der Entfernungsmess-Abtastdetektor 10, welcher die Entfernungsmess-Detektorstrahlen 11 auf der Gebäudeaußenseite 9 bzw. 12 auf der Gebäudeinnenseite 8 erzeugt, hier auf einer Zwischenhöhe der Gesamthöhe der Toröffnung 3 oder der Berandung 4 angeordnet ist, und dass die Entfernungsmess-Detektorstrahlen 11 und 12 hier zur Aufspannung der Sicherheitsvorhänge 13 bzw. 14 über einen Schwenkbereich von mehr als 90° Grad, vorliegend etwa180° Grad zu verschwenken sind, um schließlich zu einem etwa rechteckigen Format der Sicherheitsvorhänge 13 und 14 von der unteren Begrenzung der Toröffnung 3 bis hinauf zur oberen Begrenzung der Toröffnung oder der Berandung 4 zu gelangen.

Auch hier werden, allerdings über einen Schwenkwinkel von etwa 180° Grad hinweg entsprechend den trigonometrischen Gegebenheiten synchron mit dem Schwenkwinkel dimensionierte Entfernungsmess-Laufzeitfenster als Entfernungsmess-Grenzbezugswerte vorgegeben und beim Auftreten von demgegenüber kleineren Entfernungsmesswerten wird die Stillsetzung und/oder Umsteuerung des Motorantriebs 2 ausgelöst.

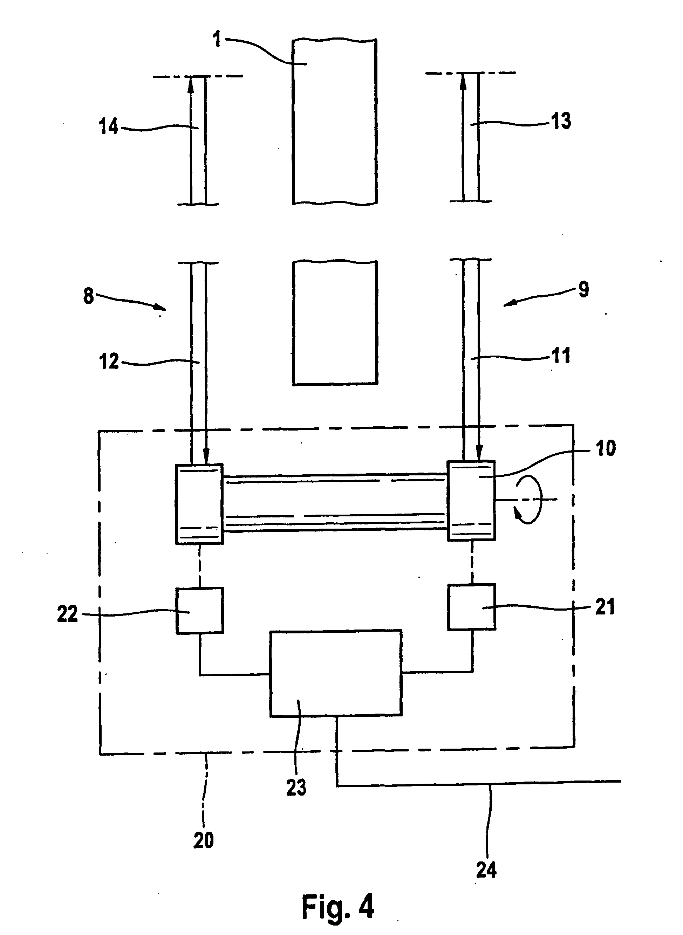

Fig. 4 zeigt eine schematische Darstellung der Einrichtung zur Durchführung des hier angegebenen Konzeptes, wobei ein, den Entfernungsmess-Abtastdetektor 10 enthaltender Laserscanner mit zugehörigen Sende- und Empfangseinheiten und einer Auswerteinheit allgemein mit 20 bezeichnet ist. Die Abbildung von Fig. 4 kann als ein Vertikalschnitt durch die Anordnungen nach den Figuren 1 bis 3 verstanden werden, wobei das Tor 1 sich, geführt durch die Berandung 4, nach abwärts in Richtung auf die Schließstellung bewegt und nach aufwärts in Richtung auf die Öffnungsstellung angetrieben wird.

Der Entfernungsmess-Abtastdetektor 10 erzeugt die zwei Entfernungsmess-Detektorstrahlen 11 und 12 auf der Gebäudeaußenseite 9 bzw. der Gebäudeinnenseite 8 als gleichsam gegabelte Entfernungsmess-Detektorstrahlen, welche gebäudeaußenseitig und gebäudeinnenseitig synchron die zuvor erwähnten, jeweils etwa rechteckig formatierten Sicherheitsvorhänge 13 bzw. 14 abtasten.

Der Entfernungsmess-Abtastdetektor 10 enthält eine durch einen gemeinsamen Antrieb zu ihren Schwenkbewegungen für die Entfernungsmess-Detektorstrahlen 11 und 12 veranlasste Drehspiegelanordnung mit auf der Gebäudeaußenseite 9 bzw. auf der Gebäudeinnenseite 8 gelegenen, synchron bewegten Drehspiegeln, welche mit Sende- und Empfangseinheiten des Laserscanners 20 gekoppelt sind, von denen die der Gebäudeaußenseite 9 zugeordnete mit 21 bezeichnet ist und die Gebäudeinnenseite 8 mit 22 bezeichnet ist. Die Sende- und Empfangseinheiten 21 und 22 liefern ihre Ausgangssignale, welche dann auftreten, wenn die Laufzeiten der Entfernungsmess-Detektorstrahlen 11 bzw. 12 die durch die vorbestimmten Sicherheitsvorhänge 13 und 14 vorgegebenen Laufzeiten des Formatfensters unterschreiten, und insbesondere dann, wenn diese Laufzeiten bei Auftreffen der Entfernungsmess-Detektorstrahlen auf ein Hindernis innerhalb der durch die Sicherheitsvorhänge 13 und 14 vorgegebenen Laufzeitfenster liegen, die Ausgangssignale an eine Auswerteeinheit 23, die bei Detektierung eines Hindernisses über eine Leitung 24 den Torantrieb 2 ausschaltet oder für einen Schnellrücklauf umschaltet.

Aufgrund der gleichen Dimensionierung der Sicherheitsvorhänge 13 und 14 und aufgrund des synchronen Umlaufs der Drehspiegelanordnungen, welche eine Verschwenkung der Entfernungsmess-Detektorstrahlen 11 und 12 bewirken, ist es für die Auswerteeinheit 23 gleichgültig, von welcher Seite, also von der Gebäudeaußenseite 9 oder der Gebäudeinnenseite 8, ein Entfemungsmessergebnis des Laserscanners 20 das Auftreten eines Hindernisses detektiert. Aufgrund dieser Gegebenheit, die durch den gleichsam gegabelten Detektorstrahl mit den beiden Entfernungsmess-Detektorstrahlen 11 und 12 geschaffen ist, vereinfacht sich die Auswertung der Ausgangssignale der Sende- und Empfangseinheiten 21 und 22 in der Auswerteeinheit 23.

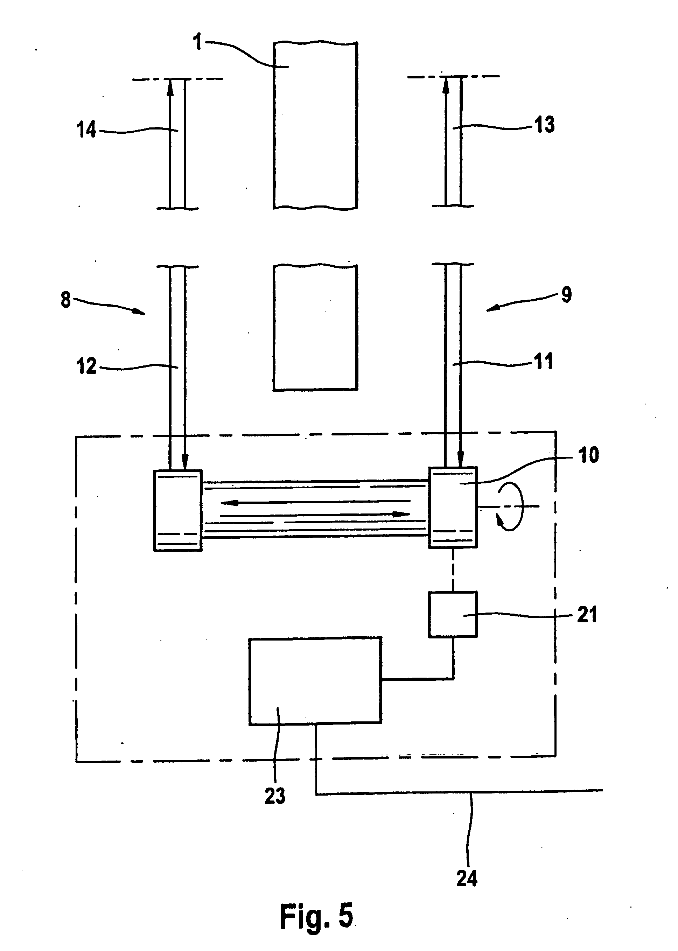

Der Entfernungsmess-Abtastdetektor 10 kann gemäß der Ausführungsform von Fig. 5 auch so ausgebildet sein, dass ihm nur eine einzige Sende-/Empfangseinheit zugeordnet ist und durch geeignete Spiegel innerhalb des Entfernungsmess-Abtastdetektors von einem einzelnen Laserlichtsender aus Energie zur Speisung der beiden Entfernungsmess-Detektorstrahlen 11 und 12 zugeleitet wird, wobei durch dem Fachmann gegebene Ausgleichmaßnahmen der optische Gangunterschied zwischen den Entfernungsmess-Detektorstrahlen 11 und 12 mit Bezug auf die Ausleitung von Empfangssignalen berücksichtigt wird.

Diese Ausführungsform zur Erzeugung der Sicherheitsvorhänge 13 und 14 gleichen Formates bedingt, dass während der Schwenkbewegungen durch den Antrieb der Drehspiegelanordnung des Entfernungsmess-Abtastdetektors 10 etwaige, auf Hindernisse hinweisende Werte der Entfemungsmesssignale alternierend mit Bezug auf die Gebäudeaußenseite 9 und die Gebäudeinnenseite 8 ausgewertet werden können, wodurch Sicherheitslücken wegen der vergleichsweise hohen Schwenkgeschwindigkeit der Entfernungsmess-Detektorstrahlen 11 und 12 nicht entstehen und eine weitere Vereinfachung der Auswerteeinheit 23 erreicht werden kann. Die übrigen Funktionen der Ausführungsform nach Fig. 5 entsprechen denjenigen, welche anhand von Fig. 4 zuvor erläutert wurden.

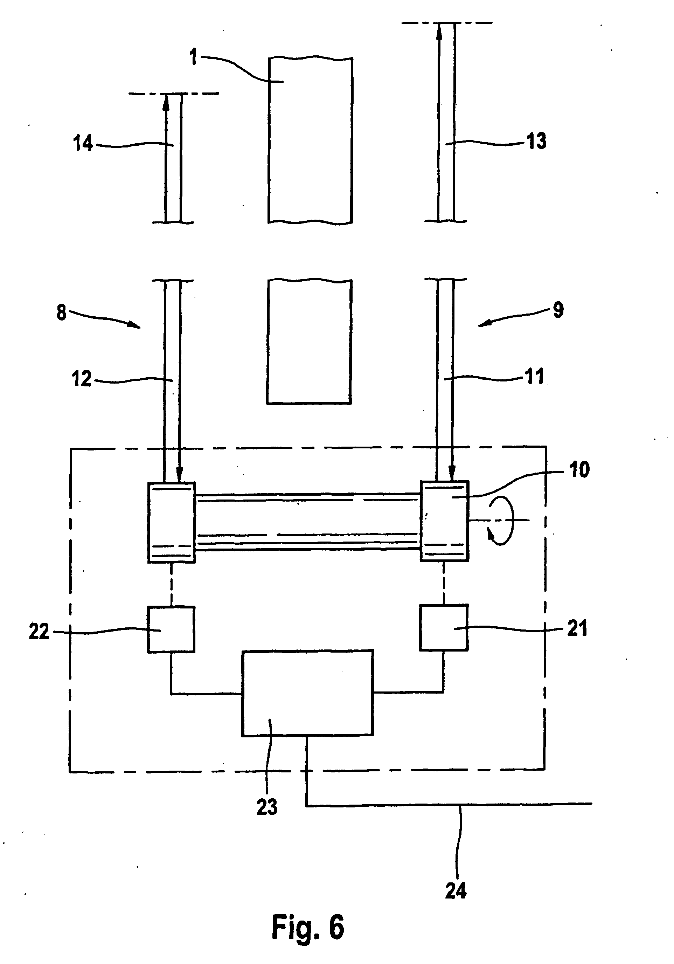

Die Ausführungsform nach Fig. 6 entspricht im wesentlichen derjenigen, welche anhand von Fig. 4 erläutert wurde.

Man erkennt jedoch, dass der an der Gebäudeaußenseite durch den Entfernungsmess-Detektorstrahl 11 erzeugte Sicherheitsvorgang 13 ein anderes Format hat als der durch den Entfernungsmess-Detektorstrahl 12 gebäudeinnenseitig erzeugte Sicherheitsvorgang 14. Diese Ausführungsform berücksichtigt unterschiedliche Überwachungsbedingungen auf der Gebäudeaußenseite 9 bzw. auf der Gebäudeinnenseite 8. In diesem Falle ist es nicht möglich, die über die Entfernungsmess-Detektorstrahlen 11 und 12 der gegabelten Detektorstrahlanordnung der gemeinsamen Entfemungsmess-Abtastdetektoranordnung 10 gesammelten Entfernungsmess - Grenzbezugswerte gleichberechtigt zu verarbeiten, derart, dass die Sende- und Empfangseinheiten 21 und 22, welche dem Entfemungs-Abtastdetektor 10 zugeordnet sind, die Verarbeitung der über die beiden Drehspiegelsysteme innerhalb und außerhalb des Gebäudes eingesammelten Entfemungsmess-Grenzbezugswerte entsprechend den Laufzeitfenstern unterschiedlichen Formates der Sicherheitsvorhänge 13 und 14 auch unterschiedlich vornehmen.

Gleichwohl ergibt sich aufgrund der synchronen Verschwenkung der Entfernungsmess-Detektorstrahlen 11 und 12 eine vereinfachte Verarbeitung in der Auswerteinheit 23, welche wiederum über die Leitung 24 bei Auftreten eines Hindernisobjektes eine Stillsetzung oder Schnellumsteuerung des Torantriebs bewirkt.

## Patentansprüche

1. Verfahren zur Steuerung eines Tores (1) mittels einer Steuerungseinrichtung gemäß Anspruch 2, welches Tor (1) mittels eines Motorantriebs (2) an mindestens einer Geradführungseinrichtung über eine rechteckige Toröffnung (3) hinweg von einer Öffnungsstellung in eine Schließstellung verfahrbar ist, und zwar in der Weise, dass während der Bewegung des Tores (1) in die Schließstellung ein Eindringen eines Hindernisobjektes (15, 16) in die Toröffnung aufgrund einer Detektorstrahlunterbrechung detektiert wird und eine Stillsetzung oder/und Umsteuerung des Motorantriebs (2) bewirkt, **dadurch gekennzeichnet, dass** nahe einer Berandung (4) der Toröffnung (3) mittels eines Entfernungsmess-Abtastdetektors (10) zwei Entfernungsmess-Detektorstrahlen (11, 12) in Ebenen parallel zur Torbewegungsebene in vergleichsweise geringem Abstand davor und dahinter synchron verschwenkt werden, deren während dieser Schwenkbewegung detektierte Entfernungsmesswerte jeweils mit entsprechenden trigonometrisch auf die Tordimension (13, 14) umgerechneten Entfernungsmess-Grenzbezugswerten verglichen werden und dass beim Auftreten von dem gegenüber kleineren Entfernungsmesswerten bei Auswertung des einen und/oder anderen Entfernungsmess-Detektorstrahls (11, 12) ein eine Stillsetzung oder/und Umsteuerung des Motorantriebs auslösendes Alarmsignal erzeugt wird.

2. Einrichtung zur Steuerung eines Tores (1), welches mittels eines Motorantriebs (2) an mindestens einer Geradführungseinrichtung über eine rechteckige Türöffnung (3) hinweg von einer Öffnungsstellung in eine Schließstellung verfahrbar ist, und zwar in der Weise, dass während der Bewegung des Tores (1) in die Schließstellung ein Eindringen eines Hindernisobjektes (15, 16) in die Toröffnung aufgrund einer Detektorstrahlunterbrechung mittels der eine Auswerteeinrichtung (23) und einen Entfernungsmess-Abtastdetektor (10) aufweisenden Steuerungseinrichtung detektiert wird und eine Stillsetzung und/oder Umsteuerung des Motorantriebs (2) bewirkt, **dadurch gekennzeichnet, dass** nahe einer Berandung (4) der Toröffnung (3) mittels des Entfernungsmess-Abtastdetektors (10) zwei Entfernungsmess-Detektorstrahlen (11, 12) in Ebenen parallel zur Torbewegungsebene in vergleichsweise geringem Abstand davor und dahinter synchron verschwenkbar sind, deren während dieser Schwenkbewegung detektierte Entfernungsmesswerte jeweils mit entsprechenden trigonometrisch auf die Tordimension (13, 14) umgerechneten Entfernungsmess-/Grenzbezugs-werten vergleichbar sind, und dass beim Auftreten von demgegenüber kleineren Entfernungsmesswerten bei Auswertung des einen und/oder anderen Entfernungsmess-Detektorstrahls (11, 12) ein eine Stillsetzung und/oder Umsteuerung des Motorantriebs auslösendes Alarmsignal erzeugbar ist; und
wobei der Entfernungsmess-Abtastdetektor (10) eine von einer Torinnenseite (8) zu einer Toraußenseite (9) reichende doppelte Drehspiegelanordnung aufweist, derart, dass ein innerer Abschnitt der Drehspiegelanordnung den hinter der Torbewegungsebene verschwenkten Entfernungsmess-Detektorstrahl (12) erzeugt und ein äußerer Abschnitt der Drehspiegelanordnung den vor der Torbewegungsebene verschwenkten Entfernungsmess-Detektorstrahl (11) erzeugt.

3. Einrichtung nach Anspruch 2, **dadurch gekennzeichnet, dass** den Entfernungsmess-Detektorstrahlen (11, 12) in dem Entfernungsmess-Abtastdetektor (10; 20), insbesondere einem Laserscanner, schwenkwinkelabhängige Laufzeitfenster zur Definition von der Torhöhe und der Torbreite entsprechenden Sicherheitsvorhängen oder Überwachungsfensterformaten (13, 14) zugeordnet sind.

4. Einrichtung nach Anspruch 3, **dadurch gekennzeichnet, dass** die Sicherheitsvorhänge oder Überwachungsfensterformate (13, 14) gleich sind.

5. Einrichtung nach Anspruch 4, **dadurch gekennzeichnet, dass** Auswerteinrichtungen (23) des Entfernungsmess-Abtastdetektors (10; 20) von Schwenkwinkelschritt zu Schwenkwinkelschritt der Entfemungsmess-Abtastdetektorstrahlen (11, 12) die Auswertung alternierend zwischen den Detektorstrahlen vornehmen.

6. Einrichtung nach Anspruch 3, **dadurch gekennzeichnet, dass** die Sicherheitsvorhänge oder Überwachungsfensterformate ungleich sind.

7. Einrichtung nach Anspruch 6, **dadurch gekennzeichnet, dass** für die Auswertung der Entfernungsmess-Detektorstrahlen (11, 12) getrennte Auswertkanäle vorgesehen sind.

8. Einrichtung nach einem der Ansprüche 2 bis 7, **dadurch gekennzeichnet, dass** die vergleichsweise geringen Abstände vor und hinter dem Tor (1), welchen die Ebenen der zwei Entfernungsmess-Detektorstrahlen (11, 12) vor und hinter der Bewegungsebene des Tores (1) haben, so bemessen sind, dass auch bei teilgeschlossenem Tor ein gegen dieses sich annähernde Hindernis (15, 16) durch einen Raschrücklauf des Tores an einem Anstoßen gegen das Tor gehindert wird.

## Claims

1. Method for controlling a gate (1) by means of a control device according to claim 2, which gate (1) is movable beyond a rectangular gate opening (3) from an open position into a closed position by means of a motor drive (2) on at least one slide guide arrangement, such that during the movement of the gate (1) into the closed position the intrusion of an obstacle (15, 16) into the gate opening is detected on the basis of an interruption to a detector beam and causes a shutdown and/or a reversal of the motor drive (2), **characterised in that** close to a boundary edge (4) of the gate opening (3) two distance measurement detector beams (11, 12) are synchronously oscillated by means of a distance measurement scanning detector (10) in planes parallel to the gate movement plane at a comparatively small distance in front of and behind this, the distance measurement values thereof detected during this oscillation movement are respectively compared with corresponding distance measurement limit reference values converted trigonometrically to the gate dimension (13, 14), and that when lower distance measurement values compared thereto occur on evaluation of one and/or the other distance measurement detector beam (11, 12) an alarm signal triggering a shutdown and/or reversal of the motor drive is generated.

2. Device for controlling a gate (1), which is movable beyond a rectangular gate opening (3) from an open position into a closed position by means of a motor drive (2) on at least one slide guide arrangement, such that during the movement of the gate (1) into the closed position the intrusion of an obstacle (15, 16) into the gate opening is detected by means of the control device comprising an evaluation device (23) and a distance measurement scanning detector (10) on the basis of an interruption to a detector beam and causes a shutdown and/or a reversal of the motor drive (2), **characterised in that** close to a boundary edge (4) of the gate opening (3) two distance measurement detector beams (11, 12) can be synchronously oscillated by means of the distance measurement scanning detector (10) in planes parallel to the gate movement plane at a comparatively small distance in front of and behind this, the distance measurement values thereof detected during this oscillation movement are respectively comparable with corresponding distance measurement limit reference values converted trigonometrically to the gate dimension (13, 14), and that when lower distance measurement values compared thereto occur on evaluation of one and/or the other distance measurement detector beam (11, 12) an alarm signal triggering a shutdown and/or reversal of the motor drive can be generated; and wherein the distance measurement scanning detector (10) has a dual rotating mirror arrangement extending from a gate inside (8) to a gate outside (9) in such a manner that an inner section of the rotating mirror arrangement generates the distance measurement detector beam (12) oscillated behind the movement plane of the gate and an outer section of the rotating mirror arrangement generates the distance measurement detector beam (11) oscillated in front of the movement plane of the gate.

3. Device according to claim 2, **characterised in that** in the distance measurement scanning detector (10; 20), in particular a laser scanner, the distance measurement detector beams (11, 12) have associated oscillation angle-dependent transit time windows for defining safety curtains or observation window formats (13, 14) corresponding to the gate height and the gate width.

4. Device according to claim 3, **characterised in that** the safety curtains or observation window formats (13, 14) are the same.

5. Device according to claim 4, **characterised in that** evaluation devices (23) of the distance measurement scanning detector (10; 20) perform the evaluation alternately between the detector beams from oscillation angle step to oscillation angle step of the distance measurement scanning detector beams (11, 12).

6. Device according to claim 3, **characterised in that** the safety curtains or observation window formats are not the same.

7. Device according to claim 6, **characterised in that** separate evaluation channels are provided for the evaluation of the distance measurement detector beams (11,12).

8. Device according to one of claims 2 to 7, **characterised in that** the comparatively small distances in front of and behind the gate (1), which have the planes of the two distance measurement detector beams (11, 12) in front of and behind the movement plane of the gate (1), are dimensioned such that even when the gate is partially closed an obstacle (15, 16) approaching this is prevented from striking against the gate by a rapid reverse movement of the gate.

## Revendications

1. Procédé de commande d'une porte (1) à l'aide d'un dispositif de commande selon la revendication 2, laquelle porte (1) peut être déplacée à l'aide d'un entraînement motorisé (2) sur au moins un dispositif de guidage linéaire au-delà d'une ouverture de porte rectangulaire (3) d'une position d'ouverture à une position de fermeture, et ce de telle manière que pendant le déplacement de la porte (1) dans la position de fermeture, une pénétration d'un objet obstacle (15, 16) dans l'ouverture de porte est détectée en raison d'une interruption du faisceau de détecteur et provoque un arrêt et/ou changement de sens de l'entraînement motorisé (2), **caractérisé en ce que** près d'une bordure (4) de l'ouverture de porte (3) à l'aide d'un détecteur de balayage télémétrique (10), deux faisceaux de détecteur télémétrique (11, 12) sont pivotés de manière synchrone dans des plans parallèlement au plan de déplacement de la porte à une distance relativement faible devant et derrière celui-ci, dont les valeurs télémétriques détectées pendant ce mouvement de pivotement sont respectivement comparées avec des valeurs de référence limites télémétriques correspondantes, converties par voie trigonométrique à la dimension de la porte (13, 14) et **en ce qu'**un signal d'alarme déclenchant un arrêt et/ou un changement de sens de l'entraînement motorisé est généré lors de la survenue de valeurs télémétriques inférieures par rapport à celui-ci lors de l'évaluation d'un et/ou de l'autre faisceau de détecteur télémétrique (11, 12).

2. Dispositif de commande d'une porte (1) qui peut être déplacée à l'aide d'un entraînement motorisé (2) sur au moins un dispositif de guidage linéaire au-delà d'une ouverture de porte rectangulaire (3) d'une position d'ouverture à une position de fermeture, et ce de telle manière que pendant le déplacement de la porte (1) dans la position de fermeture, une pénétration d'un objet obstacle (15, 16) dans l'ouverture de porte est détectée en raison d'une interruption de faisceau de détecteur à l'aide du dispositif de commande présentant un dispositif d'évaluation (23) et un détecteur de balayage télémétrique (10) et provoque un arrêt et/ou un changement de sens de l'entraînement motorisé (2), **caractérisé en ce que** près d'une bordure (4) de l'ouverture de porte (3) à l'aide du détecteur de balayage télémétrique (10), deux faisceaux de détecteur télémétrique (11, 12) peuvent être pivotés de manière synchrone dans des plans parallèlement au plan de déplacement de la porte à une distance relativement faible devant et derrière celui-ci, dont les valeurs télémétriques détectées pendant ce mouvement de pivotement peuvent respectivement être comparées avec des valeurs de référence limites/télémétriques correspondantes, converties par voie trigonométrique à la dimension de la porte (13, 14) et **en ce qu'**un signal d'alarme déclenchant un arrêt et/ou un changement de sens de l'entraînement motorisé peut être généré lors de la survenue de valeurs télémétriques inférieures par rapport à celui-ci lors de l'évaluation d'un et/ou de l'autre faisceau de détecteur télémétrique (11, 12) ; et
le détecteur de balayage télémétrique (10) présentant un double ensemble de miroir tournant allant d'un côté intérieur de porte (8) à un côté extérieur de porte (9) de telle manière qu'une section intérieure de l'ensemble de miroir tournant génère le faisceau de détecteur télémétrique (12) pivoté derrière le plan de déplacement de la porte et une section extérieure de l'ensemble de miroir tournant génère le faisceau de détecteur télémétrique (11) pivoté devant le plan de déplacement de la porte.

3. Dispositif selon la revendication 2, **caractérisé en ce que** des fenêtres de temps de marche dépendant de l'angle de pivotement sont associées aux faisceaux de détecteur télémétrique (11, 12) dans le détecteur de balayage télémétrique (10, 20), en particulier un scanner laser pour la définition de rideaux de sécurité ou formats de fenêtre de surveillance (13, 14) correspondant à la hauteur et à la largeur de porte.

4. Dispositif selon la revendication 3, **caractérisé en ce que** les rideaux de sécurité ou formats de fenêtre de surveillance (13, 14) sont identiques.

5. Dispositif selon la revendication 4, **caractérisé en ce que** des dispositifs d'évaluation (23) du détecteur de balayage télémétrique (10 ; 20) entreprennent en alternance l'évaluation entre les faisceaux de détecteur d'angle de pivotement en angle de pivotement des faisceaux de détecteur de balayage télémétrique (11, 12).

6. Dispositif selon la revendication 3, **caractérisé en ce que** les rideaux de sécurité ou formats de fenêtre de surveillance ne sont pas identiques.

7. Dispositif selon la revendication 6, **caractérisé en ce que** des canaux d'évaluation séparés pour l'évaluation des faisceaux de détecteur télémétrique (11, 12) sont prévus.

8. Dispositif selon l'une quelconque des revendications 2 à 7, **caractérisé en ce que** les distances relativement faibles devant et derrière la porte (1) que présentent les plans des deux faisceaux de détecteur télémétrique (11, 12) devant et derrière le plan de déplacement de la porte (1) sont dimensionnées de sorte à empêcher également, en cas de porte partiellement fermée, un obstacle s'approchant de celle-ci (15, 16) de buter contre la porte par un retour rapide de cette dernière.
